# EUROPÄISCHE PATENTANMELDUNG

(11) **EP 2 511 673 A1**
(43) Veröffentlichungstag der Anmeldung: **17.10.2012**
(21) Anmeldenummer: 12002433.6
(22) Anmeldetag: 04.04.2012
(51) Int. Cl.: G01F 1/66, G01N 29/07

(54) **Verfahren zur Messung von Durchflussmengen nach dem Prinzip der Ultraschalllaufzeitdifferenz**

(30) Priorität: 13.04.2011 DE 102011016963
(71) Anmelder: Hydrometer GmbH, 91522 Ansbach (DE)
(72) Erfinder: Horn, Roland, 91629 Weihenzell (DE); Gaugler, Ulrich, 91746 Weidenbach (DE)
(74) Vertreter: Diehl Patentabteilung

(57) **Zusammenfassung**

Die vorliegende Erfindung betrifft Verfahren zur Ultraschall-Messung von Durchflussmengen von strömenden Fluiden, nach dem Laufzeitdifferenzverfahren, wobei das die Messstrecke durchströmende Fluid sowohl stromauf- als auch stromabwärts mit von Ultraschallwandlern erzeugten ersten Ultraschallsignal mit einer ersten Ultraschallfrequenz f₁ beaufschlagt wird, bei dem ein zweites Ultraschallsignal mit einer zweiten Ultraschallfrequenz f₂ erzeugt wird, die Laufzeitdifferenzerfassung in Bezug auf die erste Ultraschallfrequenz f₁ sowie zweite Ultraschallfrequenz f₂ erfolgt und das Ergebnis der Laufzeitdifferenzerfassung bei der ersten Ultraschallfrequenz f₁ sowie das Ergebnis der Laufzeiterfassung bei der zweiten Ultraschallfrequenz f₂ für die Berechnung der Durchflussmenge vorzugsweise unter Berücksichtigung einer Koinzidenzbedingung verwendet werden.

## Beschreibung

Die vorliegende Erfindung betrifft zum einen ein Verfahren zur Ultraschall-Messung der Durchflussmenge von strömendem Fluid z. B. Wasser nach dem Oberbegriff des Anspruchs 1 sowie zum anderen einen Durchflussmesser nach dem Oberbegriff des Anspruchs 9 bzw. 11.

### Technologischer Hintergrund

Bei der Ultraschall-Messung in Fluiden werden üblicherweise an beiden Enden der vom Fluid durchströmten Messstrecke Ultraschallwandler, die als kombinierte Sende- und Empfangswandler ausgebildet sind, angeordnet. Jeder der beiden Ultraschallwandler wird mit einem von einem Generator erzeugten elektrischen Signal einer bestimmten Frequenz, z.B. 1 MHz, angeregt, wodurch vom Ultraschallwandler beispielsweise jeweils ein Ultraschall-Burst von 5 bis 100 Perioden erzeugt wird, der die Messstrecke jeweils in der einen bzw. anderen Richtung durchläuft. Anschließend wird die Zeitdifferenz der Laufzeit der beiden Ultraschall-Bursts gemessen. Aus der Zeitdifferenz kann dann der Durchfluss rechnerisch ermittelt werden.

### Nächstliegender Stand der Technik

Aus der CH PS 604 133 ist ein Durchflussvolumenzähler für flüssige Medien bekannt, bei dem die Durchflussmenge ebenfalls aus einer Laufzeitdifferenz-Messung abgeleitet wird. Das verwendete Ultraschallsignal besitzt hierbei eine Frequenz von 1 MHz. Die Laufzeitdifferenz ergibt sich aus einer Verschiebung des Nulldurchgangs des Empfangssignals des jeweiligen Ultraschallwandlers. Die Obergrenze des Messbereichs mit Auswertung der Phasenlage wird durch die verwendete Ultraschallfrequenz begrenzt, denn es kann nicht zwischen einer Laufzeit t und einer Laufzeit t+1/_{f} unterschieden werden. Eine Reduzierung der verwendeten Frequenz ermöglicht es, die Obergrenze des Messbereichs zu erhöhen. Jedoch verringert sich dann die Messgenauigkeit.

### Aufgabe der vorliegenden Erfindung

Die Aufgabe der vorliegenden Erfindung besteht darin, ein gattungsgemäßes Verfahren bzw. einen gattungsgemäßen Durchflussmesser mit vergrößertem Messbereich bei erhöhter Messgenauigkeit zur Verfügung zu stellen.

### Lösung der Aufgabe

Die vorgenannte Aufgabe wird beim gattungsgemäßen Verfahren durch die Merkmale des kennzeichnenden Teils von Anspruch 1 gelöst. Ferner wird die vorliegende Aufgabe bei dem gattungsgemäßen Durchflussmesser durch die Merkmale des kennzeichnenden Teils von Anspruch 9 bzw. Anspruch 11 gelöst.

Zweckmäßige Ausgestaltungen der vorliegenden Erfindung finden sich in den Unteransprüchen.

Die Erfindung ermöglicht es mit besonders einfachen sowie preisgünstigen Mittel zum einen die obere Grenze des Messbereichs d. h. die obere Grenze der zu messenden Durchflussmenge eines Ultraschalldurchflussmesser zu erhöhen zum anderen gleichzeitig dessen Messgenauigkeit und somit dessen Messdynamik zu verbessern.

Dadurch, dass die Berechnung der Durchflussmenge unter Berücksichtigung einer Koinzidenzbedingung aus den Laufzeitmessungen der ersten und zweiten Frequenz erfolgt, kann eine bei nur einer Frequenz vorliegende Mehrdeutigkeit bei der Auswertung der Laufzeitdifferenz eliminiert werden.

Als Koinzidenzbedingung kann vorteilhaft die Phasenlage, so z. B. eine identische Phasenlage, herangezogen werden. Diese ist durch die Ansteuerung durch die Generatorschaltung ohnehin bekannt.

Zweckmäßigerweise wird als weitere Frequenz eine Resonanzfrequenz des zum Einsatz kommenden Wandlerkörpers verwendet. Hierdurch können ausreichende Signalpegel auf der Empfangsseite erzielt werden, so dass auf Maßnahmen zur zusätzlichen Verstärkung der Anregung- und/oder Empfangssignale bzw. Wandlersignale verzichtet werden kann.

Gemäß einer weiteren Ausgestaltung kann als Resonanzfrequenz eine Radialresonanzfrequenz des Wandlerkörpers als weitere Frequenz ausgewählt werden. Diese hat eine geringere Frequenz als die "übliche Dickenresonanz erster Ordnung", die gewöhnlich als Anregungsfrequenz zum Einsatz kommt. Hierdurch kann die obere Grenze des Messbereichs beträchtlich erhöht werden, da die Messpeaks bei dieser Frequenz weiter auseinanderliegen, die zweite d. h. höhere Frequenz demgegenüber jedoch eine genaue Zuordnung der Messpeaks erlaubt.

Die Auswahl einer Dickenresonanzfrequenz als weitere Frequenz hat den Effekt einer vorteilhaften Abstrahlcharakteristik in Richtung des Messkanals und bewirkt damit eine gute Signalstärke auf der Empfangsseite.

Gemäß einer zweckmäßigen Ausgestaltung der Erfindung kann das Ultraschallsignal mit der ersten Ultraschallfrequenz f₁ und zweiten Ultraschallfrequenz f₂ von einem gemeinsamen Generator erzeugt werden.

Ferner kann das Ultraschallsignal die erste Ultraschallfrequenz f₁ und zweite Ultraschallfrequenz f₂ zeitlich nacheinander enthalten, was durch ein einfaches Umschalten der vom Generator stammenden Anregungsfrequenz erreichbar ist.

Alternativ können auch bei Bedarf zwei Generatoren zum Einsatz kommen.

### Beschreibung der Erfindung anhand von Ausführungsbeispielen

Zweckmäßige Ausgestaltungen der vorliegenden Erfindung werden an Hand von Zeichnungsfiguren näher erläutert. Es zeigen:
- Fig. 1: eine stark vereinfachte Darstellung der wesentlichen Bauteile eines herkömmlichen Ultraschalldurchflussmessers ;
- Fig. 2: eine stark vereinfachte Darstellung eines die Messstrecke durchlaufenden Ultraschallsignals (Ultraschall-Burst);
- Fig. 3: die Mehrdeutigkeit bei der Messung der Laufzeitdifferenz bei einer fest vorgegebenen Frequenz des Ultraschallsignals (Fig. 3A) sowie eine Darstellung der daraus resultierenden Messbereichsgrenzen eines herkömmlichen Sensors zur Erfassung der Laufzeitdifferenz (Fig. 3B);
- Fig. 4: die Reduzierung der Mehrdeutigkeit der Laufzeitdifferenzmessung bei gemeinsamer Auswertung der Messungen mit zwei verschiedenen Frequenzen f₁ sowie f₂ gemäß der vorliegenden Erfindung sowie
- Fig. 5: eine stark vereinfachte Darstellung der wesentlichen Bauteile eines Ultraschalldurchflussmessers gemäß einer zweckmäßigen Ausgestaltung der vorliegenden Erfindung.

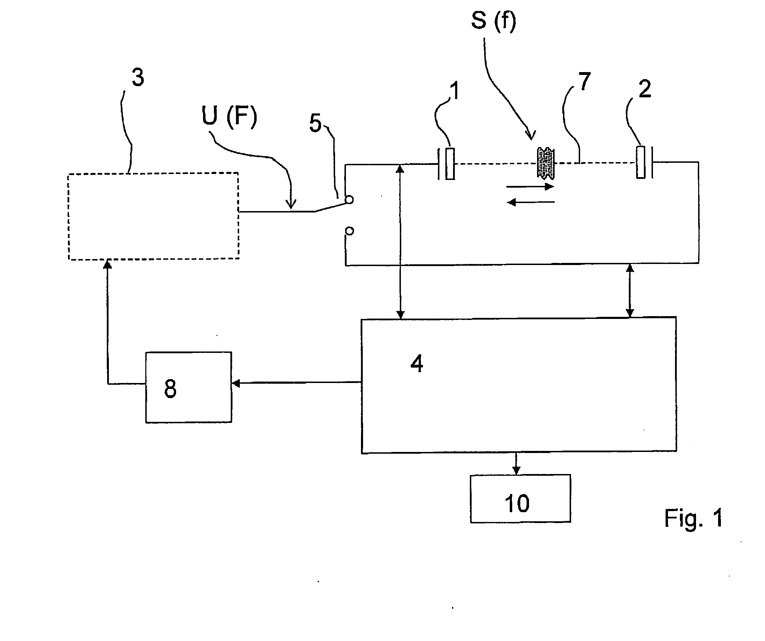

Die in Fig. 1 dargestellte Anordnung umfasst eine durch zwei Ultraschallwandler 1 und 2 gebildete, von dem zu messenden Medium z. B. einer Flüssigkeit wie Wasser durchströmten Messstrecke 7 (gestrichelte Linie). Ferner ist eine Generatorschaltung 3 zur Erzeugung eines elektrischen Signals U zur Anregung des jeweiligen Wandlers 1 bzw. 2 sowie eine Auswerteschaltung 4 zum Empfang der vom Empfangswandler erzeugten elektrischen Signale und zur Messung der Laufzeitdifferenz der die Messstrecke 7 in beiden Richtungen durchlaufenden Ultraschallsignale vorgesehen. Die Ultraschallwandler 1 und 2 arbeiten abwechselnd als Sendewandler sowie Empfangswandler. Hierzu sind die beiden Wandler 1, 2 über eine Umschalteinrichtung 5 mit der vorgenannten Generatorschaltung 3 verbunden.

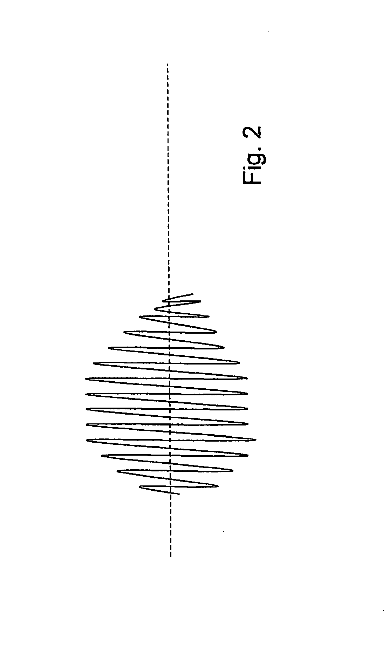

Um ein Ultraschallsignal durch die Messstrecke 7 hindurch zu senden, wird über die Generatorschaltung 3 der eine Ultraschallwandler, z.B. der Ultraschallwandler 1, mit dem elektrischen Signal U, welches eine Frequenz F aufweist, über ein gewisses Zeitfenster hinweg angeregt. Der Ultraschallwandler 1 gibt daraufhin ein Ultraschallsignal S (Ultraschall-Burst), welches eine der Anregungsfrequenz F entsprechende Frequenz f aufweist, in die Messstrecke 7 hinein ab. In Fig. 2 ist ein derartiges Ultraschallsignal vereinfacht dargestellt. Das Ultraschallsignal weist in der Praxis eine Mehrzahl von Schwingungsperioden auf und bietet die Möglichkeit der Erfassung und Auswertung der Nulldurchgänge oder der Flanken dieser Schwingungen.

Das Ultraschallsignal S wird nach dem Durchlauf durch die Messtrecke 7 vom anderen Ultraschallwandler, in diesem Fall vom Ultraschallwandler 2, empfangen, in ein entsprechendes elektrisches Signal umgewandelt und der Auswerteschaltung 4 zugeführt. In entsprechender Weise wird auch ein gegenläufiges Ultraschallsignal durch die Messstrecke geschickt und der Auswerteschaltung 4 zugeführt.

Die Phasendifferenz also die strömungsbedingte Verschiebung der Phase des Empfangssignals (stromabwärts) gegenüber der Phase des Empfangssignals (stromaufwärts) wird in der Auswerteschaltung als Laufzeitdifferenz gemessen. Die Messung der Laufzeitdifferenz kann beispielsweise in bekannter Weise (verwiesen wird hierzu beispielsweise auf die CH-PS 604 133) z.B. durch Auswertung der Phasenlage der jeweiligen Empfangssignale zueinander, erfolgen.

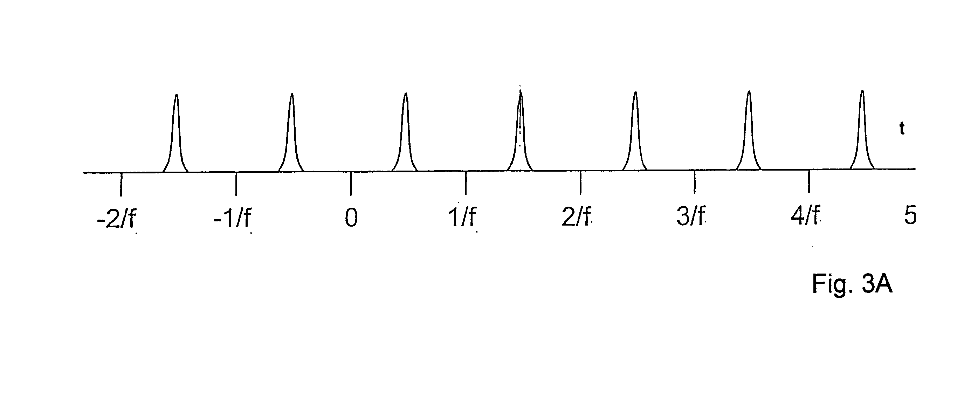

Fig. 3A zeigt die entsprechend der gewählten Frequenz f sich wiederholenden Messpeaks der Phasenverschiebung bei einer herkömmlichen Messung der Laufzeitdifferenz auf einer Zeitachse (z. B. in ns). Sofern keine Laufzeitdifferenz vorliegt, d. h. die Flüssigkeit ruht, wird keine Phasenverschiebung gemessen. Der Messpeak befindet sich auf dem Nullpunkt, die übrigen Messpeaks sind jeweils im Abstand von 1/f (Periodendauer) entfernt. Dass es sich bei dem Messpeak um einen verbreiterten Peak und nicht um einen Strich handelt, rührt von der Messungenauigkeit des Sensors der Auswerteschaltung 3.

Wird, wie in Fig. 3A, dargestellt eine Phasenverschiebung gemessen, verschieben sich die Messpeaks vom Nullpunkt weg. Der Abstand des Messpeaks zum Nullpunkt entspricht der gemessenen Laufzeitdifferenz. Wie aus Fig. 3A deutlich wird, sind die vom Nullpunkt rechts sowie links liegenden Messpeaks allerdings für größere Durchflussmengen (d. h. größere Laufzeitdifferenzen) nicht mehr eindeutig. Denn es ist nicht eindeutig, ob der außerhalb der Länge einer Periodendauer liegende Messpeak eine Laufzeitdifferenz t oder t+1/f abbildet.

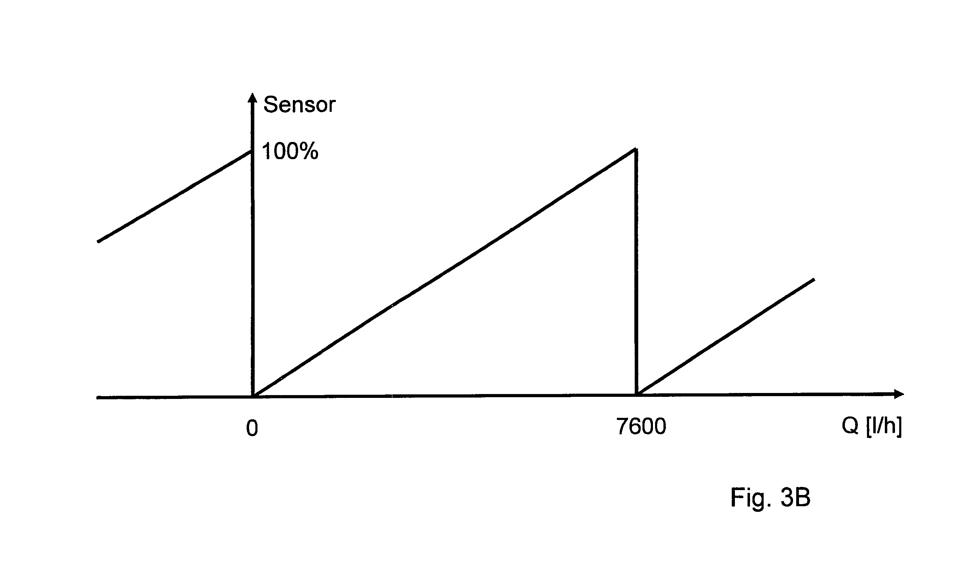

Fig. 3B zeigt die daraus resultierenden Messbereichsgrenzen eines herkömmlichen Sensors als Bestandteil der Auswerteschaltung zur Erfassung der Laufzeitdifferenz auf der Grundlage von Phasenverschiebung. Die obere Grenze des Messbereichs von auf Laufzeitdifferenz-Messungen mit Auswertung der Phasenlage beruhenden Ultraschalldurchflussmessern wird somit bisher bei gegebenen geometrischen Gegebenheiten (Länge der Messstrecke, Durchmesser des Messkanals) durch die verwendete Ultraschallfrequenz, also durch den Periodenabstand bestimmt.

Um eine ausreichende obere Grenze des Messbereichs zu gewährleisten, muss daher eine niedrige Frequenz (z. B. 1 MHz) mit entsprechend größerer Periodendauer verwendet werden. Hierdurch leidet allerdings die Messgenauigkeit und Messdynamik, was sich insbesondere bei geringen Durchflussmengen nachteilig auswirkt.

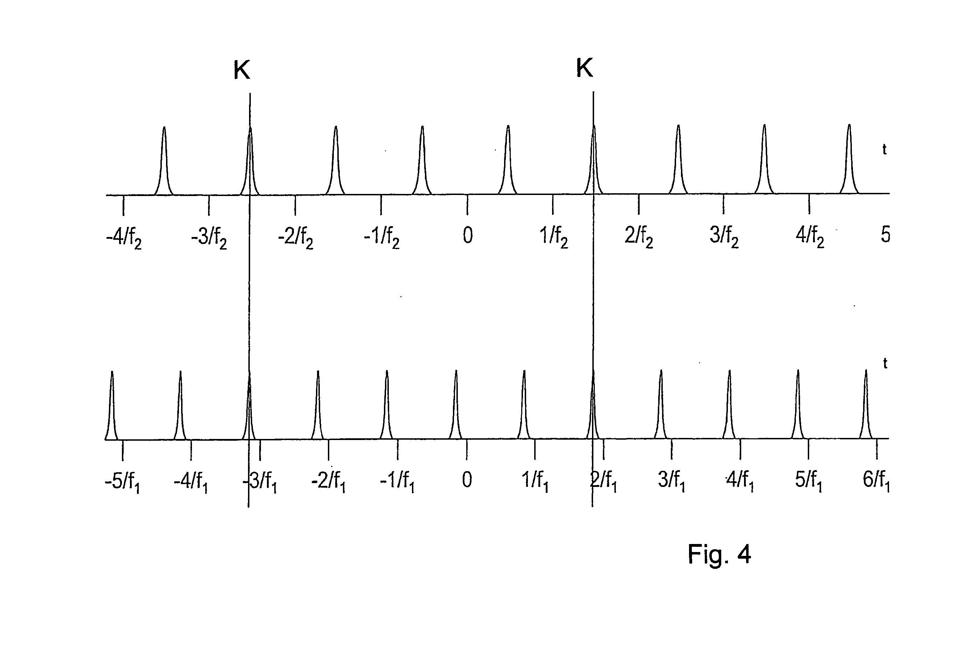

Gemäß der Erfindung wird, wie in Fig. 4 dargestellt, ein Ultraschallsignal mit einer ersten Frequenz f₁ sowie einer weiteren Frequenz f₂ erzeugt und durch die Messstrecke 7 geschickt. Im dargestellten Beispiel ist die Frequenz f₂ = 0.8 f₁. Die Schwingungen der beiden Frequenzen f₁, f₂ sind koinzident d. h. erfüllen in bestimmten zeitlichen Abständen eine Koinzidenzbedingung wie z. B. im Falle der in Fig. 4 dargestellten Schwingungen eine nach mehren Messpeaks wiederkehrende gleiche Phasenlage K. In der praktischen Umsetzung kann die Anregung des betreffenden Ultraschallwandlers 1 bzw. 2 in einfacher Weise von der ersten Frequenz F₁ auf die zweite Frequenz F₂ umgeschaltet werden, so das sich ein Ultraschallsignal (Ultraschall-Burst) mit einer ersten Frequenz f₁ sowie ein späteres Ultraschallsignal (Ultraschall-Burst) mit einer zweiten Frequenz f₂ ausbilden und die Messstrecke 7 durchlaufen.

Gemäß der vorliegenden Erfindung werden zur Bestimmung des Durchflusses die Ergebnisse der Laufzeitdifferenz-Messungen bei beiden Frequenzen f₁, f₂ ausgewertet. Die gesuchte Laufzeitdifferenz aus den Ergebnissen beider Laufzeitdifferenz-Messungen ergibt sich daraus, dass die gesuchte Laufzeitdifferenz die Koinzidenzbedingung K, vorliegend z. B. die gleiche Phasenlage, erfüllen muss. Bei einer gemeinsamen Auswertung beider Laufzeitdifferenz-Messungen ergibt sich als Folge im dargestellten Beispiel (f₂ = 0.8 f₁) ein "erweiterter Messbereich" von 5/f₁. Dies entspricht einer Verfünffachung der oberen Grenze des Messbereichs der ersten Messung (Frequenz f₁).

Vorteilhaft ist es, vor allem dann, wenn die Frequenzen f₁ und f₂ nahe beieinander liegen (f₁/f₂ ≈ 1), dass die Unschärfen beider Messungen (Messpeak-Breite) so klein gehalten werden, dass der bis zu der Koinzidenz K kleinste auftretende Abstand (in Fig. 4: 1/4 1/f₁) deutlich größer ist als die Messpeak-Breite.

Gemäß einem weiteren Aspekt der vorliegenden Erfindung wird als zusätzliche Frequenz f₂ eine Frequenz ausgewählt, die einer Resonanzfrequenz des verwendeten Ultraschallwandlers, zumindest im Wesentlichen, entspricht d. h. eine Frequenz bei der eine Resonanz beim verwendeten Ultraschallwandler auftritt.

Gemäß einer Ausgestaltung kann als Resonanzfrequenz eine Dickenresonanzfrequenz höherer Ordnung (ungerade Zahl größer 1) ausgewählt werden also eine Resonanzfrequenz mit einem ungeradzahligen Vielfachem der Frequenz der ersten Dickenresonanz. Die Auswahl dieser Dickenresonanzfrequenz hat den Effekt einer vorteilhaften Abstrahlcharakteristik in Richtung des Messkanals und gewährleistet damit eine gute Signalstärke auf der Empfangsseite.

Gemäß einer Ausgestaltung kann als Resonanzfrequenz auch eine Radialresonanzfrequenz ausgewählt werden. Diese wiederum hat den Vorteil, dass sie aufgrund der typischen Abmessungen der Wandlerkörper eine vergleichsweise geringere Frequenz hat, wodurch die obere Grenze des Messbereichs erhöht werden kann, also die Messpeaks bei dieser Frequenz weiter auseinander liegen.

Wenn z. B. von einer herkömmlichen Frequenz f₁ von 1 MHz ausgegangen wird, die der ersten Dickenresonanzfrequenz eines Ultraschallwandlers mit üblichen Abmessungen (Dicke ca. 2,0.mm) entspricht, kann als weitere Frequenz f₂ eine unterhalb von 1 MHz liegende Radialresonanzfrequenz verwendet werden.

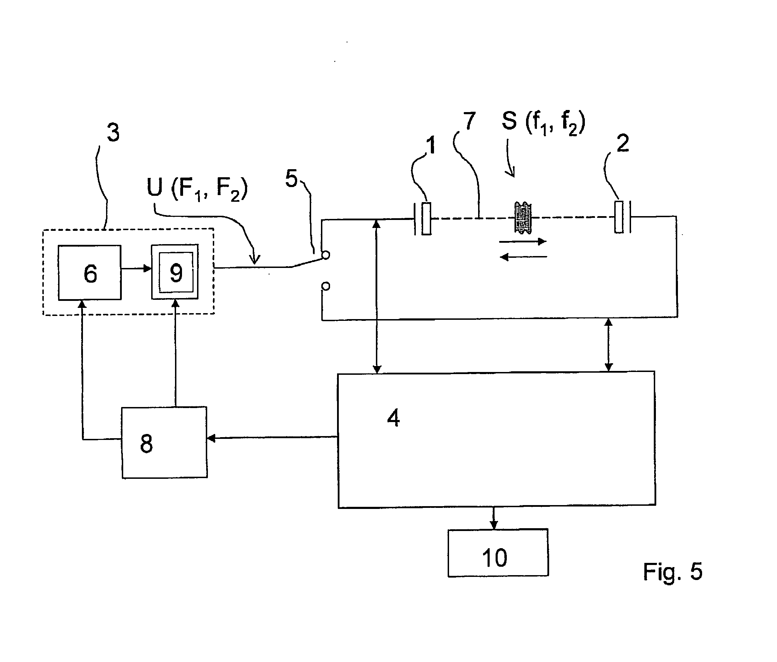

Fig. 5 beschreibt eine besondere Ausgestaltung einer Generatorschaltung 3 eines Durchflusszählers gemäß der vorliegenden Erfindung. Die Generatorschaltung 3 umfasst einen gemeinsamen Generator 6, z. B. einen spannungsgesteuerten Oszillator, sowie einen vorzugsweise programmierbaren Teiler 9, die es ermöglichen eine Umschaltung der elektrischen Anregungsfrequenz von F₁ auf F₂ oder umgekehrt vorzunehmen und hierdurch Ultraschallsignale der gewünschten Frequenzen an den Ultraschallwandlern zu erzeugen.. Diese Ausgestaltung ist mit nur geringem konstruktivem Aufwand zu realisieren.

Gemäß einer alternativen Ausgestaltung können aber auch zwei Generatoren zur die Koinzidenzbedingung erfüllenden Anregung des betreffenden Ultraschallwandlers mit mindesten zwei Frequenzen vorgesehen sein.

Die vorliegende Erfindung erlaubt es, mit vergleichsweise einfachen Mitteln eine wirksame Vergrößerung der oberen Grenze des Messbereichs bei gleichzeitiger Erhöhung der Messdynamik zu schaffen.

### BEZUGSZEICHENLISTE

- 1: erster Ultraschallwandler
- 2: zweiter Ultraschallwandler
- 3: Generatorschaltung
- 4: Auswerteschaltung
- 5: Umschalteinrichtung
- 6: Generator
- 7: Messstrecke
- 8: Prozessor
- 9: Frequenzteiler
- 10: Datenausgabe

## Patentansprüche

1. Verfahren zur Ultraschall-Messung von Durchflussmengen von strömenden Fluiden nach dem Laufzeitdifferenzverfahren, wobei das die Messstrecke durchströmende Fluid sowohl stromauf- als auch stromabwärts mit von Ultraschallwandlern erzeugten ersten Ultraschallsignal mit einer ersten Ultraschallfrequenz f₁ beaufschlagt wird,
**dadurch gekennzeichnet, dass**
ein zweites Ultraschallsignal mit einer zweiten Ultraschallfrequenz f₂ erzeugt wird,
die Laufzeitdifferenzerfassung in Bezug auf die erste Ultraschallfrequenz f₁ sowie zweite Ultraschallfrequenz f₂ erfolgt und
das Ergebnis der Laufzeitdifferenzerfassung bei der ersten Ultraschallfrequenz f₁ sowie das Ergebnis der Laufzeiterfassung bei der zweiten Ultraschallfrequenz f₂ für die Berechnung der Durchflussmenge verwendet werden.

2. Verfahren nach Anspruch 1,
**dadurch gekennzeichnet, dass**
die Berechnung der Durchflussmenge unter Berücksichtigung einer Koinzidenzbedingung aus den beiden Laufzeitdifferenzmessungen erfolgt.

3. Verfahren nach Anspruch 2,
**dadurch gekennzeichnet, dass**
die Koinzidenzbedingung die Phasenlage des Ultraschallsignals der ersten Ultraschallfrequenz f₁ sowie zweiten Ultraschallfrequenz f₂ ist.

4. Verfahren nach mindestens einem der vorhergehenden Ansprüche,
**dadurch gekennzeichnet, dass**
es sich bei der zweiten Ultraschallfrequenz f₂ um eine Resonanzfrequenz des verwendeten Ultraschallwandlers handelt.

5. Verfahren nach Anspruch 4,
**dadurch gekennzeichnet, dass**
es sich bei der zweiten Ultraschallfrequenz f₂ um eine Dickenresonanzfrequenz höherer Ordnung handelt.

6. Verfahren nach Anspruch 4,
**dadurch gekennzeichnet, dass**
es sich bei der zweiten Ultraschallfrequenz f₂ um eine Radialresonanzfrequenz handelt.

7. Verfahren nach mindestens einem der vorhergehenden Ansprüche,
**dadurch gekennzeichnet, dass**
das Ultraschallsignal mit der ersten Ultraschallfrequenz f₁ und zweiten Ultraschallfrequenz f₂ von einem gemeinsamen Generator erzeugt wird.

8. Verfahren nach mindestens einem der vorhergehenden Ansprüche,
**dadurch gekennzeichnet, dass**
das Ultraschallsignal mit der ersten Ultraschallfrequenz f₁ und das Ultraschallsignal mit der zweiten Ultraschallfrequenz f₂ zeitlich nacheinander erzeugt werden.

9. Durchflussmesser zur Erfassung der Durchflussmenge eines strömenden Fluids, z. B. Wasser mit
einer Messstrecke (7),
einem ersten Ultraschallwandler (1) am dem einen Ende der Messtrecke (7), einem zweiten Ultraschallwandler (2) am dem anderen Ende der Messtrecke (7), wobei jeder Ultraschallwandler (1,2) im Sendezustand dazu vorgesehen ist, ein elektrisches Signal (Anregungssignal) in ein Ultraschallsignal umzuwandeln und im Empfangszustand ein empfangenes Ultraschallsignal in ein elektrischen Signal (Empfangssignal) umzuwandeln,
einer Generatorschaltung (3) zur Erzeugung und Bereitstellung des den jeweiligen Ultraschallwandlers (1,2) anregenden elektrischen Signals,
einer Auswerteschaltung (4) zur Auswertung der vom Ultraschallwandler (1,2) stammenden Empfangssignale
einer Umschalteinrichtung (5), die den jeweiligen Ultraschallwandler (1,2) entweder auf die Generatorschaltung (3) oder die Auswerteschaltung (4) aufschaltet,
**dadurch gekennzeichnet, dass**
im Bereich der Generatorschaltung (3) ein gemeinsamer Generator (6) zur Erzeugung eines elektrisches Signal mit einer der ersten Ultraschallfrequenz f₁ entsprechenden ersten Frequenz F₁ sowie mit einer der zweiten Ultraschallfrequenz f₂ entsprechenden zweiten Frequenz F₂ vorgesehen ist.

10. Durchflussmesser nach Anspruch 9,
**dadurch gekennzeichnet, dass**
die Generatorschaltung (3) einen Frequenzumschalter oder Frequenzteiler (9) aufweist.

11. Durchflussmesser zur Erfassung der Durchflussmenge eines strömenden Fluids, z. B. Wasser mit
einer Messstrecke (7),
einem ersten Ultraschallwandler (1) am dem einen Ende der Messtrecke (7), einem zweiten Ultraschallwandler (2) am dem anderen Ende der Messtrecke (7), wobei jeder Ultraschallwandler (1, 2) im Sendezustand dazu vorgesehen ist, ein elektrisches Signal (Anregungssignal) in ein Ultraschallsignal umzuwandeln und im Empfangszustand ein empfangenes Ultraschallsignal in ein elektrischen Signal (Empfangssignal) umzuwandeln,
einer Generatorschaltung (3) zur Erzeugung und Bereitstellung des den jeweiligen Ultraschallwandlers (1,2) anregenden elektrischen Signals,
einer Auswerteschaltung (4) zur Auswertung der vom Ultraschallwandler (1,2) stammenden Empfangssignale
einer Umschalteinrichtung (5), die den jeweiligen Ultraschallwandler (1,2) entweder auf die Generatorschaltung (3) oder die Auswerteschaltung (4) aufschaltet,
**dadurch gekennzeichnet, dass**
die Generatorschaltung (3) folgende Merkmale umfasst:
einen erster Generator (6) zur Erzeugung eines elektrisches Signal mit einer der ersten Ultraschallfrequenz f₁ entsprechenden ersten Anregungsfrequenz F₁ sowie ein zweiter Generator (7) mit einer der zweiten Ultraschallfrequenz f₂ entsprechenden zweiten Anregungsfrequenz F₂ sowie
eine Schaltung zur Gewährleistung der Koinzidenz der beiden aus erster Anregungsfrequenz F₁ sowie zweiter Anregungsfrequenz F₂ zu erzielenden Ultraschallfrequenzen f₁ sowie f₂ aufweist.
